# EUROPÄISCHE PATENTSCHRIFT

(11) **EP 2 206 824 B1**
(45) Veröffentlichungstag und Bekanntmachung des Hinweises auf die Patenterteilung: **24.07.2013**
(21) Anmeldenummer: 10001570.0
(22) Anmeldetag: 16.02.2010
(51) Int. Cl.: D06F 58/20

(54) **Haushaltgerät mit Bottich, Wärmepumpe und Tank**
Household device with barrel, heat pump and tank
Appareil ménager doté d'une cuve, d'une pompe à chaleur et d'un réservoir

(43) Veröffentlichungstag der Anmeldung: 14.07.2010
(73) Patentinhaber: V-Zug AG, CH-6301 Zug (CH)
(72) Erfinder: Werner, Jürg, 8908 Hedingen (CH); Dober, Ernst, 6036 Dierikon (CH)
(74) Vertreter: Sutter, Kurt

(56) Entgegenhaltungen:
- EP-A1- 2 064 982
- EP-A1- 2 096 203
- DE-A1- 3 048 268
- DE-A1- 3 214 216
- JP-A- 2003 265 889
- US-A1- 2005 072 022

## Beschreibung

### Gebiet der Erfindung

Die Erfindung betrifft ein Haushaltgerät, insbesondere einen Geschirrspüler oder eine Waschmaschine, mit einem Bottich zum Bearbeiten eines Guts, mit einem Tank und mit einer Wärmepumpe, mit welcher dem Tank Wärme entziehbar und dem Bottich Wärme zuführbar ist. Die Erfindung betrifft weiter ein Verfahren zum Betrieb eines solchen Haushaltgeräts.

### Hintergrund

Eine Waschmaschine dieser Art ist in EP 2 096 203 beschrieben. Sie besitzt einen Bottich zur Aufnahme der zu waschenden Wäsche, einen Tank zur Zwischenspeicherung von Abwasser aus dem Bottich sowie eine Wärmepumpe. Mit der Wärmepumpe kann dem Tank Wärme entzogen werden, um diese dem Bottich zuzuführen. Eine derartige Anordnung erlaubt es, den Energieverbrauch des Geräts zu reduzieren. Allerdings kann es zu einer Verschmutzung des Tanks mit Ablagerungen aus dem Abwasser kommen, was störend ist und spezielle Massnahmen erforderlich macht.

JP 2003 265889 beschreibt ein Gerät mit einem Wärmespeichertank und einer Wärmepumpe. Im Tank ist zur Speicherung von Wärme Wasser angeordnet.

### Garstellung der Erfindung

Es stellt sich die Aufgabe, ein Haushaltgerät mit guter Effizienz bereitszustellen.

Diese Aufgabe wird vom Haushaltgerät gemäss Anspruch 1 gelöst. Demnach ist der Tank ein geschlossener Tank. Unter einem "geschlossenen Tank" ist dabei ein Tank zu verstehen, dessen Inhalt im Rahmen des normalen Prozesses, welcher vom Haushaltgerät durchgeführt wird, nicht gewechselt wird. Insbesondere sind keine Leitungen vorgesehen, mit denen Wasser vom Tank in den Bottich zuführbar oder Wasser aus dem Bottich in den Tank abführbar wäre.

Der Erfindung liegt die Erkenntnis zugrunde, dass auch mit einem geschlossenen Tank grosse Energieeinsparungen möglich sind, indem der Tank mit der Wärmepumpe z.B. von Zimmertemperatur abgekühlt wird.

Weiter ist das Gerät dazu ausgestaltet, die Flüssigkeit soweit abzukühlen, dass sie mindestens teilweise gefriert. Damit kann die latente Wärme des Phasenübergangs von flüssig nach fest genutzt werden, wodurch eine hohe Speichereffizienz erreicht wird.

Dank der Verwendung eines geschlossenen Tanks kann dabei die Temperatur des Tanks ohne weiteres auch auf unter 5°C, insbesondere unter 4°C, abgekühlt werden. Im Gegensatz hierzu kann bei einer konventionellen Lösung, bei welcher das Wasser nach dem Abkühlen in die Kanalisation abgegeben wird, das Wasser nicht unter 5°C abgekühlt werden.

Die Abkühlung der Flüssigkeit kann auch auf 0°C oder sogar noch tiefer erfolgen.

Das Verfahren zum Betrieb des Haushaltgeräts umfasst mindestens eine erste Prozessphase, in welcher der Flüssigkeit im Tank Wärme entzogen und dem Bottich zugeführt wird. Optional kann in einer zweiten Prozessphase (insbesondere in einer späteren Prozessphase des gleichen Prozesses) dem Bottich oder dem Prozesswasser im Bottich Wärme entzogen und der Flüssigkeit im Tank zugeführt werden.

Die vorliegende Erfindung kann für unterschiedliche Typen von Haushaltgeräten verwendet werden, bei denen ein Gut in einem Bottich bearbeitet wird. Insbesondere kommen dabei in Frage:
- Ein Geschirrspüler, bei welchem das Geschirr in einem Bottich gereinigt wird.
- Eine Waschmaschine, bei welcher die Wäsche in einem Bottich gewaschen wird. Typisch ist bei derartigen Geräten im Bottich eine gegenüber dem Bottich drehbare, wasserdurchlässige Trommel zur Aufnahme der Wäsche vorgesehen.

Grundsätzlich kann die Erfindung jedoch auch in anderen Arten von Haushaltgeräten eingesetzt werden. Als wichtiges Beispiel sei in diesem Zusammenhang der Wäschetrockner genannt, bei welchem die Wäsche in einem Bottich getrocknet wird.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine schematische Darstellung einer Waschmaschine und
Fig. 2 eine schematische Darstellung eines Geschirrspülers.

### Wege zur Ausführung der Erfindung

### Waschmaschine:

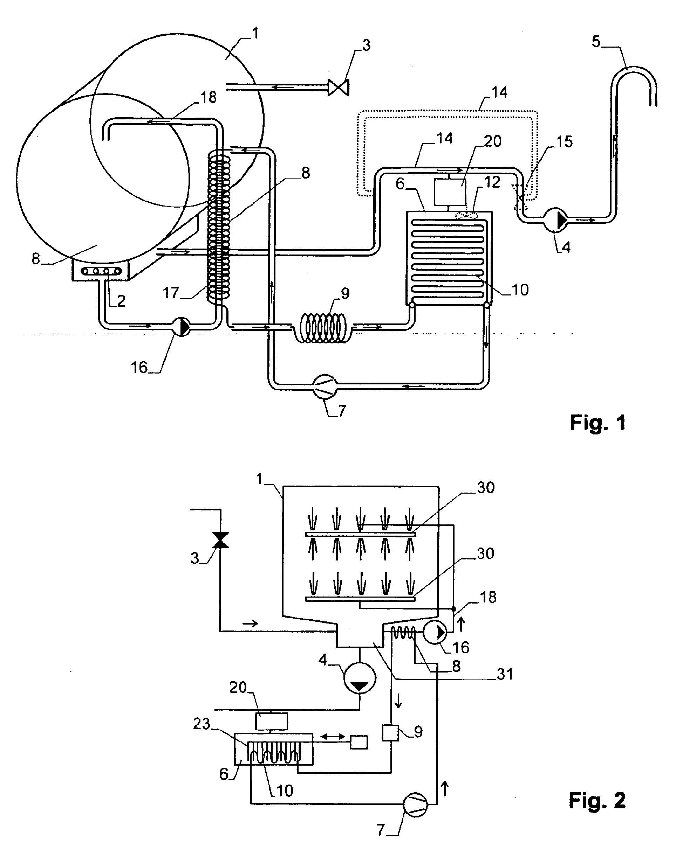

In Fig. 1 wird die Erfindung exemplarisch anhand einer Waschmaschine dargestellt.

Die in Fig. 1 schematisch dargestellte Waschmaschine besitzt einen Bottich 1, in welchem in der Regel eine Trommel (nicht gezeigt) zur Aufnahme der zu waschenden Wäsche angeordnet ist. Am Bottich 1 ist (optional) eine elektrische Heizung 2 angeordnet, welche dazu dient, Prozesswasser elektrisch auf die gewünschte Temperatur zu heizen. Weiter besitzt das Gerät in bekannter Weise einen Trommelantrieb um die Trommel zu drehen. Eine Steuerung kontrolliert und steuert die Operationen aller Komponenten. Ein derart ausgestaltetes Gerät ist dem Fachmann bekannt.

Das Gerät besitzt im vorliegenden Ausführungsbeispiel einen Prozesswasserkreislauf, mit welchem Prozesswasser aus dem Bottich 1 entnommen und an anderer Stelle wieder zurück in den Bottich geführt werden kann. Namentlich umfasst der Prozesswasserkreislauf eine Förderpumpe 16, mit welcher Prozesswasser aus dem Bottich abgepumpt und über eine Leitung 18 zurück in den Bottich geführt wird.

Frischwasser wird dem Gerät zur Verwendung als Prozesswasser über ein Frischwasserventil 3 zugeführt. Gebrauchtes Wasser wird von einer Ablaufpumpe 4 aus dem Bottich 1 durch eine Abwasserleitung 5 abgepumpt. Auch diese Komponenten sind dem Fachmann grundsätzlich bekannt.

Weiter besitzt das Gerät einen geschlossenen Tank 6, in welchem sich eine (bei Zimmertemperatur flüssige) Flüssigkeit befindet.

Das Gerät besitzt eine Wärmepumpe umfassend einen Kompressor 7, von welchem ein Wärmepumpenmedium zu einem Kondensator 8 gepumpt wird, wo unter Abgabe von Wärme eine Verflüssigung stattfindet. Vom Kondensator 8 gelangt das Medium über ein Expansionsventil 9 zu einem Verdampfer 10, wo das Medium unter Aufnahme von Wärme verdampft. Vom Verdampfer 10 läuft das Medium zurück zum Kompressor 7.

Der Begriff "Expansionsventil" umfasst dabei jegliche Art von Kapillaren, Drosseln oder dergleichen, die geeignet sind, den Druck des in der Wärmepumpe gepumpten Mediums vor dem Verdampfer zu reduzieren.

In der in Fig. 1 gezeigten Ausführung ist der Kondensator 8 thermisch mit dem Prozesswasserkreislauf verbunden, indem er z.B. an der Leitung 18 und/oder der Förderpumpe 16 angeordnet ist.

Alternativ kann der Kondensator 8 auch direkt mit dem Bottich 1 in thermischem Kontakt stehen, und zwar vorzugsweise an dessen Bodenbereich, da sich dort das Prozesswasser ansammelt. Er kann z.B. innerhalb, ausserhalb oder in der Bottichwand angeordnet sein.

Der Verdampfer 10 ist thermisch mit dem Tank 6 und somit mit der sich im Tank 6 befindlichen Flüssigkeit gekoppelt. Er kann innerhalb des Tanks 6 oder in oder an dessen Wand angeordnet sein.

Zwischen der Abwasserleitung 5 und dem Tank 6 kann ein Wärmetauscher 20 vorgesehen sein, um Wärme aus dem Abwasser in die Flüssigkeit im Tank 6 zu transferieren.

Die Funktionsweise des Geräts während einem Waschprogramm, d.h. einem Zyklus zum Waschen einer Wäschecharge, ist wie folgt:
1. Zu Beginn wird über das Frischwasserventil 3 Frischwasser für den Hauptwaschgang eingelassen, z.B. 20 bis 25 Liter für 8 kg Wäsche. Unter Normbedingungen besitzt dieses Frischwasser z.B. eine Temperatur von 15°C.
2. Gleichzeitig wird die Wärmepumpe gestartet, mit dem Ziel, dem Tank 6 Wärmeenergie zu entziehen und dem Prozesswasser im Bottich 1 zuzuführen. Erreicht die Temperatur im Bottich 1 bzw. im Prozesswasser dabei einen vorgegebenen Wert (je nach Programm z.B. zwischen 20, 30, 40, 60 oder 95°C) nicht, so kann zusätzlich mit der elektrischen Heizung 2 elektrisch geheizt werden, entweder gleichzeitig mit oder nach dem Heizen mittels Wärmepumpe. Die Wärmepumpe wird ausgeschaltet, wenn die Temperatur der Flüssigkeit im Tank eine vorgegebene Schwelle unterschreitet und/oder wenn die Temperatur des Prozesswassers den gewünschten Wert erreicht hat. Mit dem so aufgewärmten Prozesswasser wird die Wäsche gewaschen. Die in diesem Schritt dem Tank 6 entziehbare Wärmemenge hängt von der Anfangstemperatur der Flüssigkeit ab. Diese kann, je nach Prozessführung und zeitlichem Abstand zwischen den Prozessschritten, der Umgebungstemperatur entsprechen oder höher oder tiefer als dieselbe sein.
3. Am Ende dieser Waschphase wird die Ablaufpumpe 4 in Betrieb gesetzt und das Prozesswasser wird über die Abwasserleitung 5 fortgeführt. Dabei wird dem Prozesswasser ein Teil der Wärme über den Wärmetauscher 20 entzogen und der Flüssigkeit im Tank 6 zugeführt.
4. Über Frischwasserventil 3 wird neues Frischwasser (z.B. 15 bis 20 Liter) für eine Spülphase eingelassen.
5. Die Wärmepumpe kann optional wieder in Gang gesetzt werden, um die Wärme vom Tank 6 in das Prozesswasser im Bottich 1 zu fördern. Sodann kann das Spülen der Wäsche unter Reversierung stattfinden.
6. Das Wasser aus dem Bottich 1 wird wiederum abgepumpt und gibt dabei wiederum einen Teil seiner Wärme über den Wärmetauscher 20 an die Flüssigkeit im Tank 6 ab.
7. Über Frischwasserventil 3 wird neues Frischwasser (z.B. 15 bis 20 Liter) für eine Veredlungsphase (optional) eingelassen.
8. Die Wärmepumpe kann optional wieder in Gang gesetzt werden, um die Wärme vom Tank 6 in das Prozesswasser im Bottich 1 zu fördern. Spätestens wenn die Wärme vom Tank 6 getauscht ist, wird die Wärmepumpe abgeschaltet.
9. Das Wasser aus dem Bottich 1 wird wiederum abgepumpt und kann dabei über den Wärmetauscher 20 die Flüssigkeit im Tank 6 nochmals erwärmen.

Aus dem obigen Prozessablauf ist ersichtlich, dass mit der Wärmepumpe in einer ersten Prozessphase aus dem Tank 6 Wärme in das Prozesswasser im Bottich gefördert wird, und in einer zweiten, späteren Prozessphase ein Teil der Wärme wieder zurück in die Flüssigkeit des Tanks 6 transferiert wird, wodurch die Energiebilanz des Geräts verbessert werden kann. Insbesondere kann auch in der Spülphase und/oder der Veredlungsphase warmes Wasser verwendet werden, so dass deren Wirksamkeit verbessert wird, ohne dass eine grosse Menge zusätzlicher Energie oder Waschmittel benötigt wird.

Zu Beginn des Waschprogramms kann zudem die Wärme aus dem Abwasser des vorherigen Waschprogramms genutzt werden, falls der zeitliche Abstand zwischen den Waschprogrammen nicht zu gross ist. Falls zwischen den Waschprogrammen lange Zeit verstrichen ist, kann zumindest die Wärme genutzt werden, die sich aus dem Abkühlen des Wassers in Tank 6 von der Raumtemperatur ergibt.

Die Flüssigkeit im Tank 6 enthält in der Regel Wasser. Insbesondere bildet Wasser einen wesentlichen Bestandteil, d.h. die Flüssigkeit besteht zumindest zu 50% aus Wasser.

Die Flüssigkeit kann im Wesentlichen aus reinem Wasser bestehen, oder aus Wasser mit Zusätzen (siehe unten).

Anstelle von Wasser kann jedoch auch eine andere Flüssigkeit verwendet werden, beispielsweise Glykol, das den Vorteil eines tiefen Gefrierpunkts hat.

Die tiefste Temperatur, auf welche die Flüssigkeit im Tank 6 abgekühlt wird, kann z.B. knapp über dem Gefrierpunkt liegen, namentlich unter 5°C, vorzugsweise unter 4°C, für Wasser (nicht beansprucht). Indem die Flüssigkeit nicht unter ihren Gefrierpunkt abgekühlt wird, kann ein guter Wärmetausch zwischen Verdampfer 10 und der Flüssigkeit sichergestellt werden.

In einer erfindungsgemässen Ausführung wird die Flüssigkeit im Tank 6 soweit abgekühlt, dass sie zumindest teilweise gefriert, um so deren latente Wärme zu nutzen.

Um die der Flüssigkeit zu entziehende Wärmemenge weiter zu erhöhen, kann die Flüssigkeit eine Trägerflüssigkeit und ein in die Trägerflüssigkeit eingebrachtes Frostschutzmittel umfassen, wobei das Frostschutzmittel den Gefrierpunkt gegenüber dem Gefrierpunkt der reinen Trägerflüssigkeit reduziert. Auf diese Weise kann eine Abkühlung auf noch tiefere Temperaturen erfolgen, entweder bis knapp über oder bis an oder unter den Gefrierpunkt

Um den Wärmeaustausch mit der Flüssigkeit zu verbessern, können am Tank 6 Mittel zum Umrühren oder Umpumpen der Flüssigkeit vorgesehen sein, so z.B. ein Rührwerk 12.

Um eine möglichst gute Wärmeleitung zwischen der gefrorenen Flüssigkeit und dem Wärmetauscher der Wärmepumpe zu erreichen, wird die Flüssigkeit vorzugsweise nur teilweise und nicht vollständig gefroren, so dass der im flüssigen Zustand verbleibende Teil der Flüssigkeit die Wärme vom Wärmetauscher abtransportieren kann. Beispielsweise kann der Gefrierprozess so gesteuert werden, dass die Flüssigkeit nur in feinen Partikeln, als Schlämme, gefriert, z.B. indem die Flüssigkeit auch während dem Gefrierprozess dauernd gerührt oder bewegt wird.

Vorzugsweise wird der Tank 6, welcher mit dem darin enthaltenen Wasser ein beträchtliches Gewicht hat, aus mechanischen Gründen stationär und im Bodenbereich der Waschmaschine angeordnet. Unter Bodenbereich ist dabei die untere Hälfte der Waschmaschine, insbesondere ein unterer Viertel der Waschmaschine, zu verstehen. Denkbar ist aber beispielsweise auch eine Anordnung des Tanks 6 am Bottich 1, wobei in diesem Fall vorzugsweise eine thermische Isolation zwischen dem Bottich 1 und dem Tank vorgesehen sein sollte, damit es nicht zu einem "Wärmekurzschluss" kommt, da die Wärme mittels der Wärmepumpe effizienter an den Bottich 1 übertragen werden kann als durch direkten Wärmekontakt. Die Anordnung des Tanks 6 am Bottich 1 hat den Vorteil, dass so die vom Trommellauf erzeugten Schwingungen des Bottichs gedämpft werden können.

Um Wärmeverluste zwischen den Prozessphasen zu reduzieren, kann der Tank 6 thermisch isoliert werden. Alternativ kann jedoch auf eine thermische Isolierung verzichtet werden, wenn es für wichtig erachtet wird, dass sich der Tank 6 nach dem Abkühlen möglichst schnell wieder aufwärmt, indem er der Umgebung Wärme entzieht.

In der Ausführung nach Fig. 1 durchläuft das Abwasser vom Bottich 1 zwangsläufig den Wärmetauscher 6. Alternativ hierzu können ein Bypass 14 und ein Umschaltventil 15 vorgesehen sein, wie sie gestrichelt angedeutet sind. In diesem Fall kann durch Betätigung des Umschaltventils 15 wahlweise gesteuert werden, ob das Abwasser aus Bottich 1 über den Wärmetauscher 20 oder über den Bypass 14, unter Umgehung des Wärmetauschers 20, abgeführt wird. Dadurch wird es möglich, die Wärmeenergie vom Abwasser über mehr als einen Prozessschritt zurückzubehalten. Falls beispielsweise in den obigen Schritten 5 und 8 (Spülphase, Veredlungsphase) kein erwärmtes Wasser verwendet werden soll, so kann das Abwasser aus diesen Phasen über den Bypass 14 abgeführt werden, so dass die Wärme aus dem Hauptwaschgang (Schritt 2) im Tank 6 verbleibt und z.B. für den Hauptwaschgang des nächsten Waschprozesses zur Verfügung steht.

In der obigen Ausführung kann mit dem Wärmetauscher 20 Wärme vom Prozesswasser in den Tank 6 transferiert werden. Alternativ hierzu kann das Gerät auch dazu ausgestaltet sein, mit der Wärmepumpe dem Bottich 1 Wärme zu entziehen und dem Tank 6 zuzuführen, z.B. indem deren Förderrichtung umgekehrt wird.

### Geschirrspüler:

Wie erwähnt, kann die vorliegende Erfindung auch als Geschirrspüler ausgestaltet sein. Ein entsprechendes Gerät ist schematisch in Fig. 2 dargestellt.

Das Gerät nach Fig. 1 besitzt einen Bottich 1 zur Aufnahme des Spülguts, wie z.B. Geschirr und Besteck. Im Bottich 1 sind hierzu z.B. in bekannter Weise Geschirrkörbe vorgesehen (nicht gezeigt). Das Spülgut wird mit Prozesswasser aus Sprühvorrichtungen, wie z.B. drehbaren Sprüharmen 30 und/oder anderen Düsenanordnungen, beaufschlagt. Hierzu ist am Bottich ein Prozesswasserkreislauf mit einer Zirkulationspumpe 16 vorgesehen, mit welcher das Wasser aus einem Sumpf 31 des Bottichs 1 zu den Sprühvorrichtungen gefördert werden kann. Am Prozesswasserkreislauf kann eine konventionelle Heizung vorgesehen sein (nicht gezeigt), um das Prozesswasser zu erwärmen.

Weiter verfügt das Gerät über ein Frischwasserventil 3, durch welches frisches Prozesswasser, gegebenenfalls über eine Aufbereitungsanlage, wie z.B. eine Entsalzungsanlage (nicht gezeigt), dem Bottich 1 zugeführt werden kann.

Zum Abführen von Wasser aus dem Bottich 1 dient eine Ablaufpumpe 4.

Das Gerät besitzt wiederum eine Wärmepumpe mit einen Kompressor 7, einem Kondensator 8, ein Expansionsventil 9 und einem Verdampfer 10.

Der Kondensator 8 ist thermisch mit dem Prozesswasserkreislauf verbunden, indem er z.B. an der Leitung 18 und/oder der Förderpumpe 16 angeordnet ist. Alternativ oder zusätzlich hierzu kann der Kondensator 8 thermisch mit dem Bottich 1 gekoppelt sein.

Der Verdampfer 10 ist thermisch mit einem geschlossenen Tank 6 gekoppelt.

Wie in der Ausführung nach Fig. 1, ist auch die Ablaufleitung von der Ablaufpumpe 4 über einen Wärmetauscher 20 mit dem Tank 6 thermisch gekoppelt, allenfalls optional über einen Bypass, entsprechend der in Fig. 1 gestrichelt dargestellten Ausführung.

Auch bei diesem Gerät kann der Tank 6 verwendet werden, um das Prozesswasser im Bottich 1 zu erwärmen. Die Funktionsweise entspricht im Wesentlichen dem Gerät nach Fig. 1.

Anstelle oder zusätzlich zum Wärmetauscher 20 kann auch in dieser Ausführung die Wärmepumpe dazu verwendet werden, Wärme vom Bottich in die Flüssigkeit im Tank 6 zu transferieren.

### Bemerkungen:

Um den Tank 6 auch bei tiefen Temperaturen, insbesondere bei Temperaturen am oder unter dem Gefrierpunkt der Flüssigkeit zu betreiben, sind im Tank vorzugsweise metallische Lamellen angeordnet, welche in der Lage sind, Wärme auch mit der gefrorenen Flüssigkeit effizient auszutauschen. Bei diesen Lamellen handelt es sich um eine Vielzahl von Metallelementen, welche sich in die Flüssigkeit erstrecken. Die Lamellen sind mit der Wärmepumpe, insbesondere deren Verdampfer, thermisch gekoppelt. In Fig. 2 sind diese Lamellen beispielhaft unter Bezugsziffer 23 dargestellt.

Da die Flüssigkeit die Tendenz hat, an den Lamellen des Wärmetauschers auszugefrieren und diesem mit so mit einem Wärme isolierenden Mantel zu überdecken, sind die Lamellen vorzugsweise mindestens teilweise von einer Antihaftbeschichtung bedeckt, welche die Haftung von gefrorener Flüssigkeit an den Lamellen (im Vergleich zur direkten Haftung der gefrorenen Flüssigkeit an den Lamellen) reduziert. Bei Verwendung von Wasser als Flüssigkeit ist diese Beschichtung vorzugsweise hydrophob und besteht beispielsweise zumindest teilweise aus Teflon.

Zusätzlich oder alternativ zu einer Antihaftbeschichtung können die Lamellen während dem Gefrierprozess periodisch verformt werden. Hierzu kann, wie in Fig. 2 angedeutet, ein Aktuator 24 vorgesehen sein, welcher mit den freien Enden der Lamellen 23 verbunden ist und diese periodisch hin- und herbewegt.

Um einer Volumenänderung der Flüssigkeit beim Phasenübergang flüssig/fest folgen zu können, ist der Tank 6 vorzugsweise flexibel ausgestaltet.

Anstelle eines Frostschutzmittels kann die Flüssigkeit im Tank 6 auch eine Trägerflüssigkeit sein, der ein den Gefrierpunkt erhöhendes Mittel beigegeben wurde, wodurch der Gefrierpunkt gegen die reine Trägerflüssigkeit erhöht wird. Dadurch lassen sich Wärmeverluste durch Wärmetausch mit der Umgebung reduzieren, da mit kleineren Temperaturunterschieden zwischen Umgebung und Tank gearbeitet werden kann.

Der Flüssigkeit im Tank 6 können nebst der Wärme des Prozesswassers im Abflussrohr 5 auch andere Arten Abwärme des Geräts zugeführt werden. Beispielsweise kann der Tank 6 mit einem elektrischen Verbraucher, insbesondere einem Antriebsmotor zum Bewegen des Guts im Bottich oder einer Leistungselektronik des Geräts thermisch gekoppelt sein, so dass deren Abwärme mindestens Teilweise der Flüssigkeit im Tank 6 zugeführt werden kann. Hierzu können geeignete Mittel vorgesehen sein, welche Abwärme vom Verbraucher dem Tank zuführen. Diese Mittel können beispielsweise von einem passiven Wärmetauscher, einer Belüftungseinrichtung oder von einer Wärmepumpe gebildet werden.

Auch wenn der Tank 6 als geschlossener Tank bezeichnet wird, so ist nicht ausgeschlossen, dass er geöffnet werden kann, um Flüssigkeit einzufüllen und zu entleeren, sei es beispielsweise für Wartungsarbeiten oder zum Transport des Geräts. Dabei handelt es sich aber um Arbeiten, die ausserhalb des normalen Arbeitsprozesses des Geräts und in der Regel manuell durchgeführt werden.

Wenn davon gesprochen wird, dass das Haushaltgerät zu einem bestimmten Zweck ausgestaltet ist, soll dies (soweit nicht Gegenteiliges gesagt wird) so zu verstehen sein, dass die Steuerung des Geräts mindestens ein Prozessprogramm aufweist, in dessen Verlauf die Komponenten des Geräts zur Erfüllung des genannten Zwecks angesteuert werden.

Wird z.B. erwähnt, dass das Haushaltgerät dazu ausgestaltet ist, die Flüssigkeit im Tank auf eine bestimmte Temperatur oder einen bestimmten Phasenzustand abzukühlen oder zu erwärmen, so ist dies so zu verstehen, dass die Steuerung des Geräts mindestens ein Prozessprogramm aufweist, in dessen Verlauf es die Wärmepumpe so ansteuert, dass die entsprechende Temperatur in der Flüssigkeit erreicht wird. Vorzugsweise ist hierzu auch ein Temperatursensor zum Messen der Temperatur der Flüssigkeit vorgesehen, und die Steuerung ist dazu ausgestaltet, das Erreichen der entsprechenden Temperatur mit dem Temperatursensor zu überwachen und die Wärmepumpe abhängig vom Signal des Temperatursensors anzusteuern.

Weiter ist zu beachten, dass Merkmale, welche die Abläufe im Gerät beschreiben, sowohl als Vorrichtungs- als auch als Verfahrensschritte formuliert werden können und die Anmelderin sich eine entsprechende Umformulierung der Ansprüche vorbehält.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Haushaltgerät, insbesondere Geschirrspüler oder Waschmaschine, mit einer Steuerung mit einem Prozessprogramm, mit einem Bottich (1) zum Bearbeiten eines Guts, mit einem mit Flüssigkeit gefüllten Tank (6) und mit einer Wärmepumpe (7, 8, 9, 10), mit welcher dem Tank (6) Wärme entziehbar und dem Bottich (1) Wärme zuführbar ist, wobei der Tank (6) ein geschlossener Tank ist, und wobei die Steuerung mit dem Prozessprogramm dazu ausgestaltet ist, die Flüssigkeit soweit abzukühlen, dass sie mindestens teilweise gefriert.

2. Haushaltgerät nach Anspruch 1, wobei das Haushaltgerät keine Leitungen aufweist, mit denen Wasser vom Tank (6) in den Bottich (1) zuführbar oder Wasser aus dem Bottich (1) in den Tank (6) abführbar ist.

3. Haushaltgerät nach einem der Ansprüche 1 oder 2, wobei die Steuerung mit dem Prozessprogramm dazu ausgestaltet ist, die Flüssigkeit nur soweit abzukühlen, dass sie nicht vollständig gefriert.

4. Haushaltgerät nach einem der vorangehenden Ansprüche, wobei die Flüssigkeit eine Trägerflüssigkeit und ein in die Trägerflüssigkeit eingebrachtes Frostschutzmittel aufweist, wobei das Frostschutzmittel den Gefrierpunkt gegenüber dem Gefrierpunkt der reinen Trägerflüssigkeit reduziert.

5. Haushaltgerät nach einem der Ansprüche 1 bis 3, wobei die Flüssigkeit eine Trägerflüssigkeit und ein in die Trägerflüssigkeit eingebrachtes, den Gefrierpunkt erhöhendes Mittel aufweist, das den Gefrierpunkt gegenüber dem Gefrierpunkt der reinen Trägerflüssigkeit erhöht.

6. Haushaltgerät nach einem der vorangehenden Ansprüche, wobei die Flüssigkeit Wasser aufweist, und insbesondere wobei die Flüssigkeit zumindest zu 50% aus Wasser besteht.

7. Haushaltgerät nach den Ansprüchen 5 und 6, wobei die Steuerung mit dem Prozessprogramm dazu ausgestaltet ist, die Flüssigkeit im Tank (6) auf unter 5°C, insbesondere unter 4°C, abzukühlen.

8. Haushaltgerät nach einem der vorangehenden Ansprüche mit einer Abwasserleitung (5) zum Ablassen von Prozesswasser aus dem Bottich (1), und mit einem Wärmetauscher (20) zum Transfer von Wärme aus dem Abwasser in die Flüssigkeit im Tank (6), und insbesondere wobei in der Abwasserleitung (5) ein Bypass (14) vorgesehen ist zur Wahlweisen Umgehung des Wärmetauschers (20).

9. Haushaltgerät nach einem der vorangehenden Ansprüche, wobei das Haushaltgerät zusätzlich dazu ausgestaltet ist, mit der Wärmepumpe (7, 8, 9, 10) dem Bottich (1) Wärme zu entziehen und dem Tank (6) zuzuführen.

10. Haushaltgerät nach einem der vorangehenden Ansprüche mit einem Prozesswasserkreislauf, mit welchem Prozesswasser aus dem Bottich (1) entnehmbar und an anderer Stelle wieder zurück in Bottich (1) führbar ist, und wobei die Wärmepumpe (7, 8, 9, 10) einen thermisch mit dem Prozesswasserkreislauf verbundenen Kondensator oder Verdampfer aufweist, um dem Prozesswasser im Prozesswasserkreislauf Wärme zuzuführen bzw. zu entziehen.

11. Haushaltgerät nach einem der vorangehenden Ansprüche mit Mitteln (12) zum Umwälzen der Flüssigkeit im Tank (6).

12. Haushaltgerät nach einem der vorangehenden Ansprüche, wobei im Tank (6) metallische Lamellen (23) angeordnet sind, welche sich in die Flüssigkeit erstrecken mit der Wärmepumpe thermisch gekoppelt sind, und insbesondere wobei die Lamellen mindestens teilweise von einer Antihaftbeschichtung bedeckt sind.

13. Haushaltgerät nach Anspruch 12 mit einem Aktuator (24) zum periodischen Verformen der Lamellen (23).

14. Haushaltgerät nach einem der vorangehenden Ansprüche, mit mindestens einem elektrischen Verbraucher, insbesondere einem Antriebsmotor zum Bewegen des Guts im Bottich oder einer Leistungselektronik, sowie mit Mitteln zum Zuführen von Abwärme vom Verbraucher zum Tank (6).

15. Verfahren zum Betrieb des Haushaltgeräts nach einem der vorangehenden Ansprüche, wobei während einer ersten Prozessphase der Flüssigkeit im geschlossenen Tank (6) mit der Wärmepumpe (7, 8, 9, 10) Wärme entzogen wird, so dass die Flüssigkeit soweit abkühlt, dass sie zumindest teilweise gefriert, und die Wärme dem Bottich (1) zugeführt wird, und insbesondere wobei in einer zweiten Prozessphase dem Bottich (1) oder Prozesswasser Wärme entzogen und der Flüssigkeit im geschlossenen Tank (6) zugeführt wird.

## Claims

1. Domestic appliance, in particular dishwasher or washing machine, having a control unit with a process program, a tub (1) for processing items, a container (6) filled with liquid and a heat pump (7, 8, 9, 10) for extracting heat from the container (6) and transferring it to the tub (1) and wherein the control unit with the process program is designed to cool the liquid to an at least partially frozen state.

2. Domestic appliance according to claim 1, wherein the appliance includes no pipes for passing water from the container (6) to the tub (1) or for draining water from the tub (1) into the container (6).

3. Domestic appliance according to any of claim 1 or 2, wherein the control unit with the process program is designed to cool the liquid such that it is not completely frozen.

4. Domestic appliance according to any of the preceding claims, wherein the liquid comprises a base liquid and an anti-freeze agent added to the base liquid reducing the freezing point compared to the freezing point of the pure base liquid.

5. Domestic appliance according to any of the claims 1 to 3, wherein the liquid comprises a base liquid and an agent for increasing the freezing point added to the base liquid for increasing the freezing point compared to the freezing point of the pure base liquid.

6. Domestic appliance according to any of the preceding claims, wherein the liquid comprises water, particularly at least 50% of water.

7. Domestic appliance according to claim 5 and 6, wherein the control unit with a process program is designed to cool the liquid in the container (6) to below 5°C, particularly to below 4°C.

8. Domestic appliance according to any of the preceding claims, having a drain pipe (5) for draining process water from the tub (1) and a heat exchanger (20) for transferring heat from the waste water to the liquid in the container (6), in particularly wherein a bypass (14) is provided in the drain pipe (5) for the selective by-passing of the heat exchanger (20).

9. Domestic appliance according to any of the preceding claims, wherein the domestic appliance is further designed to extract with the heat pump (7, 8, 9, 10) heat from the tub (1) and to transfer it to the container (6) .

10. Domestic appliance according to any of the preceding claims, having a cycle for process water capable of draining process water from the tub (1) and injecting it back into the tub (1) at a different location and wherein the heat (7, 8, 9, 10) comprises a condenser or evaporator thermally coupled to the cycle for process water to transfer heat to or extract heat from the cycle for process water.

11. Domestic appliance according to any of the preceding claims having means (12) for moving the liquid in the container (6).

12. Domestic appliance according to any of the preceding claims, wherein fins (23) are arranged in the container (6) extending into the liquid thermally coupled to the heat pump, and particularly wherein the fins are at least partially coated with a non-sticking coating.

13. Domestic appliance according to claim 12 having an actuator (24) for the periodic deformation of the fins (23).

14. Domestic appliance according to any of the preceding claims, having at least one electric load, particularly a drive motor for moving the items in the tub or power electronics, and means for transferring waste heat from the load to the container (6).

15. Method for operating a domestic appliance in accordance with any of the preceding claims, wherein during a first process step heat is extracted from the closed container (6) using the heat pump (7, 8, 9, 10) so as to cool the liquid to an at least partially frozen state and transferring the heat to the tub (1) and in particular wherein in a second process step heat is extracted from the tub (1) or the process water and transferred to the liquid in the closed container (6).

## Revendications

1. Appareil ménager, en particulier lave-vaisselle ou lave-linge, comprenant : une commande dotée d'un programme de processus ; une cuve (1) servant à traiter un produit ; un réservoir (6) rempli d'un liquide ; et une pompe à chaleur (7, 8, 9, 10), laquelle permet d'extraire de la chaleur du réservoir (6) et d'amener de la chaleur à la cuve (1), dans lequel le réservoir (6) est un réservoir fermé, et dans lequel la commande dotée du programme de processus est configurée pour refroidir le liquide jusqu'à ce qu'il soit au moins en partie gelé.

2. Appareil ménager selon la revendication 1, dans lequel l'appareil ménager ne présente aucune conduite qui permet d'amener de l'eau du réservoir (6) dans la cuve (1) ou d'évacuer de l'eau de la cuve (1) pour l'amener dans le réservoir (6).

3. Appareil ménager selon l'une quelconque des revendications 1 ou 2, dans lequel la commande dotée du programme de processus est configurée pour refroidir le liquide uniquement tant qu'il n'est pas complètement gelé.

4. Appareil ménager selon l'une quelconque des revendications précédentes, dans lequel le liquide présente un liquide porteur et un agent antigel mélangé au liquide porteur, dans lequel l'agent antigel abaisse le point de congélation par rapport au point de congélation du liquide porteur pur.

5. Appareil ménager selon l'une quelconque des revendications 1 à 3, dans lequel le liquide présente un liquide porteur et un agent mélangé au liquide porteur et augmentant le point de congélation, lequel agent augmente le point de congélation par rapport au point de congélation du liquide porteur pur.

6. Appareil ménager selon l'une quelconque des revendications précédentes, dans lequel le liquide présente de l'eau, et sachant en particulier que le liquide est constitué au moins à 50 % d'eau.

7. Appareil ménager selon les revendications 5 et 6, dans lequel la commande dotée du programme de processus est configurée pour refroidir le liquide présent dans le réservoir (6) à une température inférieure à 5°C, en particulier à une température inférieure à 4°C.

8. Appareil ménager selon l'une quelconque des revendications précédentes comprenant une conduite d'évacuation d'eau usée (5) servant à évacuer l'eau de processus de la cuve (1), et comprenant un échangeur de chaleur (20) servant au transfert de chaleur des eaux usées au liquide présent dans le réservoir (6), et sachant en particulier qu'une dérivation (14) est prévue dans la conduite d'évacuation d'eau usée (5) pour contourner au choix l'échangeur de chaleur (20).

9. Appareil ménager selon l'une quelconque des revendications précédentes, dans lequel l'appareil ménager est configuré en outre pour extraire à l'aide de la pompe à chaleur (7, 8, 9, 10) la chaleur de la cuve (1) et l'amener au réservoir (6).

10. Appareil ménager selon l'une quelconque des revendications précédentes comprenant un circuit d'eau de processus, lequel permet de prélever l'eau de processus de la cuve (1) et de la ramener dans la cuve (1) à un autre endroit, et dans lequel la pompe à chaleur (7, 8, 9, 10) présente un condensateur ou un évaporateur relié thermiquement au circuit d'eau de processus, afin d'amener de la chaleur à l'eau de processus présente dans le circuit d'eau de processus ou d'extraire de la chaleur de cette dernière.

11. Appareil ménager selon l'une quelconque des revendications précédentes comprenant des moyens (12) servant à assurer la circulation du liquide dans le réservoir (6).

12. Appareil ménager selon l'une quelconque des revendications précédentes, dans lequel des lamelles métalliques (23) sont disposées dans le réservoir (6), lesquelles s'étendent dans le liquide et sont couplées thermiquement à la pompe à chaleur, et sachant en particulier que les lamelles sont recouvertes au moins en partie par un revêtement anti-adhésif.

13. Appareil ménager selon la revendication 12 comprenant un actionneur (24) servant à déformer périodiquement les lamelles (23).

14. Appareil ménager selon l'une quelconque des revendications précédentes, comprenant au moins un consommateur électrique, en particulier un moteur d'entraînement servant à déplacer le produit dans la cuve ou une électronique de puissance, ainsi que des moyens servant à amener de la chaleur perdue du consommateur au réservoir (6).

15. Procédé servant à faire fonctionner l'appareil ménager selon l'une quelconque des revendications précédentes, dans lequel de la chaleur est extraite, au cours d'une première phase de processus, à l'aide de la pompe à chaleur (7, 8, 9, 10), du liquide présent dans le réservoir (6) fermé de sorte que le liquide est refroidi jusqu'à ce qu'il soit au moins en partie gelé, et que de la chaleur est amenée à la cuve (1), et sachant en particulier que de la chaleur est extraite, au cours d'une deuxième phase de processus, de la cuve (1) ou de l'eau de processus et est amenée au liquide présent dans le réservoir (6) fermé.
